# EUROPÄISCHE PATENTSCHRIFT

(11) **EP 2 391 590 B1**
(45) Veröffentlichungstag und Bekanntmachung des Hinweises auf die Patenterteilung: **11.09.2019**
(21) Anmeldenummer: 09783842.9
(22) Anmeldetag: 08.10.2009
(51) Int. Cl.: C04B 24/28, C04B 24/02

(54) **ADSORPTIONSBLOCKER FÜR ZUSCHLÄGE IN FLIEßMITTEL ENTHALTENDEN BAUSTOFFMISCHUNGEN**
ADSORPTION BLOCKER FOR AGGREGATES IN BUILDING MATERIAL COMPOSITIONS CONTAINING A FLOW AGENT
INHIBITEUR D'ADSORPTION POUR ADJUVANTS DANS DES MÉLANGES DE MATÉRIAUX DE CONSTRUCTION RENFERMANT DES SOLVANTS

(30) Priorität: 09.10.2008 EP 08166260
(43) Veröffentlichungstag der Anmeldung: 07.12.2011
(73) Patentinhaber: Construction Research & Technology GmbH, 83308 Trostberg (DE)
(72) Erfinder: INGRISCH, Stefan, 83376 Truchtlaching (DE); VIERLE, Mario, 83512 Wasserburg (DE); TSELEBIDIS, Andreas, Cleveland, Ohio 44113 (DE); NEUER, Katja, 83567 Unterreit (DE); ALBRECHT, Gerhard, 83209 Prien (DE); THALER, Stefan, 83308 Trostberg (DE); BAUER, Mathias, 83308 Trostberg (DE); DÖRFLER, Tanja, 83352 Altenmarkt (DE)
(74) Vertreter: BASF IP Association
(86) Internationale Anmeldenummer: PCT/EP2009/063079
(87) Internationale Veröffentlichungsnummer: WO 2010/040796

(56) Entgegenhaltungen:
- WO-A-98/58887
- WO-A-2005/075529
- WO-A-2006/032785
- WO-A-2007/009797
- DE-A1- 10 061 410
- DE-A1-102006 011 153

## Beschreibung

Die vorliegende Erfindung betrifft eine Baustoffmischung eine die Baustoffmischung enthaltende Baustoffrezeptur sowie ein Bauwerk.

Es ist bekannt, dass man hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement oder Kalk enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Wie beispielsweise aus der WO 2005 / 075529 hervorgeht, werden als derartige Mittel in der Praxis insbesondere Copolymere eingesetzt, welche durch radikalische Copolymerisation von Säuremonomeren mit Polyethermakromonomeren hergestellt werden (Polycarboxylatether basierende Fließmittel).

Nicht selten werden in Baustoffrezepturen zusammen mit dem hydraulischen Bindemittel Zuschläge eingesetzt, welche einen höheren adsorptiven Anteil aufweisen. Mit" adsorptiven Anteil" des Zuschlags sind derartige Partikel des Zuschlags gemeint, welche insbesondere eine hohe Oberfläche und/oder große Porosität aufweisen und/ oder als Tonmineral vorliegen und deren Oberflächen für Polycarboxylatether basierende Fließmittel attraktiv sind. Somit findet eine starke Wechselwirkung der Polycarboxylatether basierenden Fließmittel mit den adsorptiven Zuschlägen statt bzw. die Polycarboxylatether basierenden Fließmittel werden in die Poren der adsorptiven Zuschläge irreversibel eingelagert, so dass die Fließmittelmoleküle für die Dispergierwirkung der Partikel des hydraulischen Bindemittels, insbesondere der Zementpartikel nicht mehr zur Verfügung stehen. Daraus folgt letztendlich, dass die Wirkung des Polycarboxylatether basierenden Fließmittels in unerwünschter Weise stark herabgesetzt wird, wodurch die Verarbeitbarkeit der Baustoffrezeptur bzw. die mechanische Qualität der ausgehärteten Baustoffrezeptur negativ beeinträchtigt wird.

Die DE10 2006 011153 A1 beschreibt fluormodifizierte Zusatzmittel mit einem Gehalt an Isocynat sowie Urethan und/oder Harnstoff-Gruppen. Die Zusatzmittel werden zur hydrophoben, oleophoben oder schmutzabweisenden Ausrüstung von hydraulischen, bzw. mineralischen Bindemitteln eingesetzt. Weiterhin werde die Wasseraufnahme der erhärteten Baustoffzusammensetzungen und Ausblühungen auf den ausgehärteten Oberflächen verringert.

Die Druckschrift WO2006/032785 A2 beschreibt ein Verfahren zur Inertisierung tonhaltiger Sande, wobei zu den Sanden kationische Copolymere mit einer Ladungsdichte von größer als 0.5 meq/g und einer intrinsischen Viskosität von weniger als 1 dg/l zugegeben werden. Die Sande werden zur Herstellung hydraulisch abbindender Zusammensetzungen, insbesondere Beton, verwendet.

WO98/58887 beschreibt ein Mittel zur Steuerung der Aktivität von Ton, dieses kann ausgewählt werden aus bspw. anorganischen Kationen und Oxyalkylenen. Das Mittel zur Steuerung der Aktivität von Ton wird bei der Herstellung hydraulischer Baustoffzusammensetzungen benutzt um die unerwünschte Adsorption von Fließmitteln an tonhaltige Sande zu reduzieren.

Aufgabe der vorliegenden Erfindung ist es, eine Zuschläge und hydraulisches Bindemittel enthaltende Baustoffmischung bereitzustellen, welche nach Zugabe von nur verhältnismäßig wenig Anmachwasser eine gut verarbeitbare Baustoffrezeptur ergibt, die nach Aushärtung gute mechanische Eigenschaften aufweist und zwar insbesondere auch dann, wenn die Zuschläge einen höheren adsorptiven Anteil aufweisen.

Die Lösung dieser Aufgabe ist eine Baustoffmischung enthaltend
a) 2,0 bis 30,0 Gew.-% eines hydraulischen Bindemittels,
b) 69,0 bis 97,0 Gew.-% Zuschlag, wobei der Zuschlag in Form von Sand, Kies und/oder mineralischen Steinen vorliegt
c) 0,005 bis 0,5 Gew.-% eines sich als Fließmittel eignendes, Polyethermakromonomerstruktureinheiten und Säuremonomerstruktureinheiten aufweisendes Copolymer und
d) 0,005 bis 0,5 Gew.-% einer sich als Adsorptionsblocker eignenden, makromolekularen, amphiphilen Verbindung,
wobei die sich als Adsorptionsblocker eignende makromolekulare, amphiphile Verbindung als Basisbaustein eine aus der Umsetzung der Einzelkomponenten D, E und A hervorgehende Struktureinheit D-E-A aufweist,
mit
E repräsentiert durch eine Verbindung aufweisend mindestens zwei reaktive Isocyanatgruppen,
D repräsentiert durch eine hydrophobe Verbindung mit mindestens einer gegenüber Isocyanaten reaktiven Gruppe, ausgewählt aus -OH, -NH₂, wobei die hydrophobe Verbindung ein Alkylpolyoxyalkylenderivat oder Polyisobutenderivat ist und die Wasserlöslichkeit der hydrophoben Verbindung bei einer Temperatur von 20° C bei Atmosphärendruck weniger als 1 g/l beträgt,
A repräsentiert durch eine hydrophile Verbindung mit mindestens einer gegenüber Isocyanaten reaktiven Gruppe, ausgewählt aus -OH, -NH₂, -COOH, wobei die Wasserlöslichkeit der hydrophilen Verbindung bei einer Temperatur von 20 ° C bei Atmosphärendruck mehr als 10 g/l beträgt, mit der Maßgabe, dass die Umsetzung der Einzelkomponenten D, E und A durch Reaktion der reaktiven Isocyanatgruppen mit den gegenüber Isocyanaten reaktiven Gruppen erfolgt.

Das Polyethermakromonomerstruktureinheiten und Säuremonomerstruktureinheiten aufweisende Copolymer wird durch radikalische Copolymerisation von Polyethermakromonomer und Säuremonomer hergestellt. Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid). Mit Polyethermakromonomeren sind radikalisch copolymerisierbare Verbindungen mit mindestens einer Kohlenstoffdoppelbindung gemeint, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Als hydrophob im Sinne der vorliegenden Erfindung sollen solche Verbindungen verstanden werden, welche bei einer Temperatur von 20 ° C eine Wasserlöslichkeit unter Atmosphärendruck von weniger als 1 g / Liter Wasser, bevorzugt von weniger als 0,3 g / Liter Wasser aufweisen.

Erfindungsgemäß sollen solche Verbindungen als hydrophil angesehen werden, welche bei einer Temperatur von 20 ° C eine Wasserlöslichkeit unter Atmosphärendruck von mehr als 10 g / Liter Wasser, bevorzugt von mehr als 30 g / Liter Wasser aufweisen.

Zuschlag im Sinne der vorliegenden Erfindung ist ein Gemenge, oder ein Haufwerk von ungebrochenen oder gebrochenen Körnen, aus natürlichen oder künstlichen mineralischen Stoffen die durch ein hydraulisches Bindemittel (insbesondere Zement) zum ausgehärteten Baustoff (insbesondere Beton) verkittet werden. Zuschlag kann in der Natur bereits in einer für die Betonherstellung geeigneten Form vorliegen.

Erforderlichenfalls wird er durch mechanische Prozesse, wie Zerkleinern, Sieben, Waschen aufbereitet. Verschiedentlich wird er auch aus natürlich vorkommenden Stoffen oder aus Neben- bzw. Abfallprodukten bestimmter industrieller Prozesse künstlich hergestellt. Für Betonzuschlag ist ein Größtkorn von 16 mm oder 32 mm normalerweise üblich. Als Zuschlag sind alle Stoffe geeignet, die eine für den jeweiligen Verwendungszweck des hydraulischen Bindemittels (insbesondere Beton) ausreichende Kornfestigkeit aufweisen, die Erhärtung des Zements nicht stören, einen ausreichenden Haftverbund mit dem erhärteten Stein des hydraulischen Bindemittels (insbesondere Zementstein) ergeben und die Beständigkeit des Baustoffs (insbesondere Beton) nicht beeinträchtigen.

Die erfindungsgemäß in der Baustoffmischung eingesetzten Adsorptionsblocker können Zuschläge in hydraulischen (insbesondere in zementären) Baustoffmassen derart modifizieren, dass durch deren Einsatz die Oberflächen der Partikel der Zuschläge für Polycarboxylatether basierende Fließmittel (also Polyethermakromonomerstruktureinheiten und Säuremonomerstruktureinheiten aufweisende Copolymere) deutlich weniger attraktiv sind. Dies hat zur Folge, dass die Wirkungsweise der Polycarboxylatether basierenden Fließmittel nicht beeinträchtigt wird und somit die Konsistenz der Baustoffrezeptur (insbesondere des Frischbetons) über die Zeit erhalten werden kann.

Der Adsorptionsblocker ist ein amphiphiles Molekül (normalerweise ein Oligomer oder Polymer), das eine besonders große Affinität zu adsorptiven Zuschläge aufweist, jedoch keine bzw. nur eine geringe Attraktivität für die Oberflächen der Partikel des hydraulischen Bindemittels (insbesondere Zementpartikel) besitzt. Durch das Verhältnis von Hydrophilie und Hydrophobie im Adsorptionsblocker lässt sich zum einen der Grad der Attraktivität des Moleküls zu den adsorptiven Zuschlägen steuern, zum anderen kann der Grad der repulsiven Wirkung für die Polycarboxylatether basierenden Fließmittel eingestellt werden.

Im Idealfall wird der Adsorptionsblocker vor der Zugabe der Fließmittelkomponente zur Betonmischung zugegeben, damit diese mit den adsorptiven Zuschlägen wechselwirken und deren Oberflächen derart modifizieren kann, dass diese für Polycarboxylatether basierende Fließmittel nicht mehr attraktiv sind.

Ein Mischprozedere kann u.a. wie folgt aussehen: In den Mischer werden die Zuschläge zusammen mit dem einer Teilmenge des gesamten Vorgabewasser und dem Adsorptionsblocker für eine gewisse Zeit gemischt, anschließend wird das hydraulische Bindemittel (insbesondere Zement) zugegeben und wieder gemischt. Danach wird die verbleibende Menge des Wassers sowie das Polycarboxylatether basierende Fließmittel zugegeben und wieder gemischt.

In der Regel enthält die erfindungsgemäße Baustoffmischung
a) 4,0 bis 20,0 Gew.-% eines hydraulischen Bindemittels,
b) 79,5 bis 95,5 Gew.-% Zuschlag, wobei der Zuschlag in Form von Sand, Kies und/oder mineralischen Steinen vorliegt,
c) 0,01 bis 0,25 Gew.-% eines sich als Fließmittel eignendes, Polyethermakromonomerstruktureinheiten und Säuremonomerstruktureinheiten aufweisendes Copolymer und
d) 0,01 bis 0,25 Gew.-% einer sich als Adsorptionsblocker eignenden, makromolekularen, amphiphilen Verbindung.

Häufig liegt die sich als Adsorptionsblocker eignende, makromolekulare, amphiphile Verbindung gemäß einem der Strukturtypen 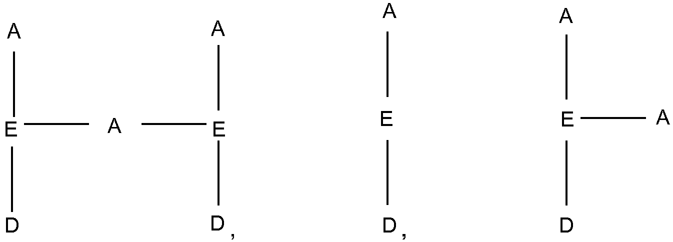 und/oder 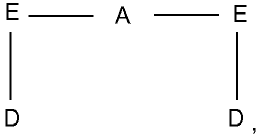 vor.

In einer bevorzugten Ausführungsform der Erfindung liegt die sich als Adsorptionsblocker eignende, makromolekulare, amphiphile Verbindung gemäß einem Strukturtypen vor, der zwei

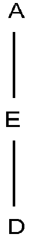

Einheiten aufweist, welche jeweils über die Einzelkomponente E durch ein polymeres Zwischenglied aufgrund von Reaktion von Isocyanatgruppen der Einzelkomponenten E mit gegenüber Isocyanaten reaktiven Gruppen des polymeren Zwischenglieds miteinander verbrückt sind, wobei das polymere Zwischenglied Ethergruppen enthält und ein Molekulargewicht von 400 bis 50000 bevorzugt von 1000 bis 25000 aufweist.

Meist wird D repräsentiert durch eine hydrophobe Verbindung mit mindestens einer gegenüber Isocyanaten reaktiven Gruppe, ausgewählt aus -OH, -NH₂, und bevorzugt A repräsentiert durch eine hydrophile Verbindung mit mindestens einer gegenüber Isocyanaten reaktiven Gruppe, ausgewählt aus -OH, -NH₂, -COOH.

Häufig liegt die Einzelkomponente A in Form eines Methylpolyethylenglykols oder in Form eines wasserlöslichen Polypropylenglykols vor.

In der Regel liegt die Einzelkomponente D als Polyisobutenamin und/oder als Polyisobutensuccinat bzw. dessen Anhydrid vor.

Bevorzugt liegt die Einzelkomponente E in Form von drei reaktive Isocyanatgruppen enthaltendem trimerem Polyisocyanat vor.

Nachstehend soll näher erläutert werden, durch welche chemischen Verbindungen die Komponenten A, E und D repräsentiert werden können:

### Komponente A:

Aus der Gruppe der Polyalkylenoxidverbindungen finden Moleküle der Struktur (I'a) Anwendung:

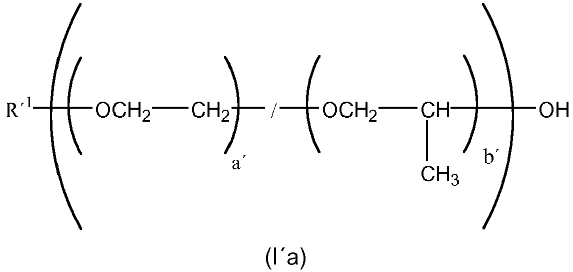

Hierbei bedeuten
- R'¹: = H, ein linearer oder verzweigter und ggf. ungesättigter aliphatischer Kohlenwasserstoff-Rest mit 1 bis 12 C-Atomen darstellt und
- a': = 0 bis 250 sowie
- b': = 0 bis 250
mit der Maßgabe, dass a' und b' in Abhängigkeit von der Molmasse so gewählt sind, dass die Polyalkylenoxidverbindung bei 20°C eine Wasserlöslichkeit von mindestens 10 g/L aufweist.

Bevorzugt steht R'¹ in Formel (I'a) für -CH₃ (Methyl),-CH₂-CH₂-CH₂-CH₃ (n-Butyl), CH=CH₂- (Vinyl) sowie CH₂=CH-CH₂-(Allyl), besonders bevorzugt für - CH₃. Die Ethylen- bzw. Propylen-Einheiten können dabei blockweise oder statistisch verteilt sein.

Bevorzugt liegt a' zwischen 20 und 200, besonders bevorzugt zwischen 20 und 150 sowie b' zwischen 0 bis 20, besonders bevorzugt zwischen 0 bis 10. Besonders bevorzugt sind Methylenpolyethylenoxide, die kommerziell beispielsweise unter dem Namen Polyglykol M™ oder Pluriol® A erhältlich sind.

Als weitere Strukturelemente für Komponente A kommen Polyoxyalkylenverbindungen der Formel (I'b) und/oder (I'c) in Betracht:

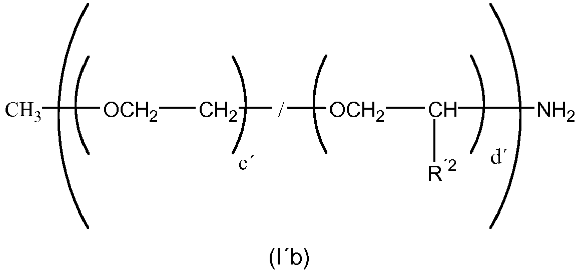

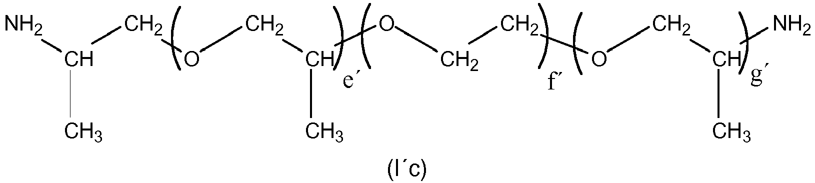

Diese sind beispielsweise unter dem Handelsnamen Jeffamine® M-1000, Jeffamine® ED-600 oder kommerziell erhältlich.

Hierbei bedeuten:
- R'²,: = H, CH₃,
- c', f': = ganze Zahl von 1 bis 100, auch unabhängig untereinander
- d', e' und g': = ganze Zahl von 0 bis 100, auch unabhängig untereinander
mit der Maßgabe, dass das Verhältnis c'/d' sowie f'/(e'+g') so gewählt wird, dass die Verbindung bei 20°C eine Wasserlöslichkeit von mindestens 10 g/L aufweist.

### Komponente D:

Komponente D kann durch folgende Struktureinheiten repräsentiert werden:
- Polyisobutenderivate, die durch Funktionalisierung von olefinisch terminierten Polyisobutenen hergestellt werden können. Hierunter eignen sich Polyisobutenamine, Polyisobutensuccinate und Polyisobutenphenole. Diese funktionalisierten Polyisobutene sind kommerziell beispielsweise unter dem Namen Kerocom®PIBA (Polyisobutenamine) erhältlich sowie Glissopal® SA (Polyisobutensuccinate) erhältlich sind. Bevorzugt werden Polyisobutenamin oder Polyisobutenbernsteinsäure verwendet, besonders bevorzugt mit einer mittleren Molmasse von 300 - 3000 g·mol⁻¹.
- Alkypolyoxyalkylenderivate wie beispielsweise Methylpolypropylenglykole mit mittleren Molmassen > 800 g·mol⁻¹ sowie analoge Butylpolyoxypropylenderivate. Weiterhin haben sich Methylpolyalkoxylenderivate bewährt, die aus Polyoxyethylen- und Polyoxypropyleneinheiten aufgebaut sind, welche statistisch oder blockweise angeordnet sein können. Das molare Verhältnis der Oxyethylen zu Oxypropyleneinheiten wird so gewählt, dass die resultierenden Alkylpolyoxyalkylenglykole bei 20°C eine Wasserlöslichkeit von weniger als 1 g/L besitzen.
- Butentetramerderivate, welche durch Funktionalisierung von Tetramerbuten erhalten werden können. Bevorzugt werden Tetramerbutenbernsteinsäure, Tetramerbutenol und Tetramerbutendiol verwendet, besonders bevorzugt Tetramerbutenol.
- Niedrig wasserlösliche bzw. wasserunlösliche Alkylalkohole aus der Gruppe der C₆-C₂₈-Alkohole wie beispielsweise1-Eicosanol, 1-Octadecanol, 1-Hexadecanol, 1-Tetradecanol, 1-Dodecanol, 1-Decanol, 1-Octanol sowie 1-Hexanol, wobei 1-Octanol und 1-Decanol und 1-Dodecanol als bevorzugt anzusehen sind.
- Niedrig wasserlösliche bzw. wasserunlösliche *N-*Alkylamine wie beispielsweise *N*-Butylamin, *N*-Pentylamin, *N*-Hexylamin, *N*-Octylamin, *N*-Decylamin, sowie *N*-Tridecylamin eingesetzt. Bevorzugt werden *N*-Hexylamin und *N*-Octylamin eingesetzt.
- Niedrig wasserlösliche bzw. wasserunlösliche *N,N*-Dialkylamine wie beispielsweise *N,N*-Ethylhexylamin, *N,N*-Dibutylamin, *N,N*-Dipentylamin, *N,N*-Dihexylamin, *N,N*-Dioctylamin, *N,N*-(2-ethylhexyl)amin, *N*-Methyl-*N*-octadecylamin sowie *N,N*-Didecylamin. Hierbei werden N,N-Ethylhexylamin sowie *N,N*-Dipentylamin bevorzugt.
- Polydimethylsiloxane der allgemeinen Formel (II'a): 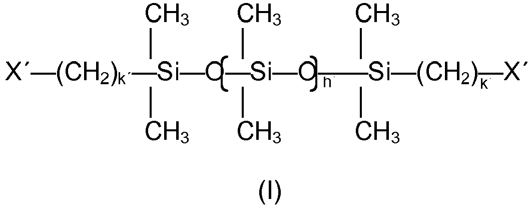 wobei
   - X': = OH, NH₂, SH, NHR'³,
   - R'³: = H, CH₃, C₂H₅,
   - h': = 1 bis 50, vorzugsweise 10 bis 30, sowie
   - k': = 1 bis 6
   bedeuten.
- Perfluoroalkylethanole der allgemeinen Formel R'₄-CH₂-CH₂-OH, mit Rest R'₄ = CF₃(CF₂)_{l'}-, wobei I' eine ganze Zahl von 6 bis 18 repräsentiert. Bevorzugt werden Mischungen mit unterschiedlichen Resten R'₄, besonders bevorzugt wird das kommerziell erhältlich Perfluoroalkylethanol Fluowet® EA 612 eingesetzt.

### Komponente E:

Komponente E kann durch folgende Struktureinheiten repräsentiert werden:
- Unter dem Namen "Lackpolyisocyanate" dem Fachmann bekannten polyfunktionellen Isocyanate auf Basis von Bis-(4-isocyanatocyclo-hexyl)-methan (H₁₂MDI), 1,6-Diisocyanatohexan (HDI), 1-lsocyanato-5-isocyanatomethyl-3,3,5-trimethyl-cyclohexan (IPDI) eingesetzt.
- Modifizierte Polyisocyanate, welche beispielsweise durch hydrophile Modifizierung von "Lackpolyisocyanaten" auf Basis von 1,6-Diisocyanatohexan (HDI) zugänglich sind.

Bevorzugt werden aus der Gruppe der aliphatischen Polyisocyanatverbindungen 1-Isocyanato-5-isocyanatomethyl-3,3,5-trimethyl-cyclohexan (IPDI), Bis-(4-isocyanatocyclo-hexyl)-methan(H₁₂MDI), 1,3-Bis-(1-isocyanato-1-methyl-ethyl)-benzol (m-TMXDI), 1,6-Diisocyanatohexan (HDI), und dessen höhere Homologe bzw. technische Isomerengemische der einzelnen aliphatischen Polyisocyanate verwendet, während aus der Gruppe der aromatischen Polyisocyanate insbesondere 2,4-Diisocyanatotoluol (TDI), Bis-(4-isocyanatophenyl)-methan (MDI) und ggf. dessen höhere Homologe (Polymeric MDI) bzw. technische Isomerengemische der einzelnen aromatischen Polyisocyanate bevorzugt eingesetzt werden. Besonders bevorzugt werden HDI-Trimerisate, welche kommerziell unter dem Namen Desmodur® N3600 oder Desmodur® N3400 erhältlich sind, eingesetzt.

Die Herstellung des erfindungsgemäß in der Baustoffmischung eingesetzten Adsorptionsblockers kann derart erfolgen, dass zunächst die Einzelkomponente E mit der Einzelkomponente A umsetzt wird und das erhaltene Umsetzungsprodukt anschließend mit der Einzelkomponente D umgesetzt wird. Alternativ kann aber auch zunächst E mit D umgesetzt werden und das Umsetzungsprodukt anschließend mit A umgesetzt werden.

Das NCO/µ-Äquivalent-Verhältnis bzgl. der freien gegenüber Isocyanaten reaktiven Gruppen (µ = -OH, -NH₂, -NH-, -COOH) kann in weiten Grenzen variiert werden, gemäß einer bevorzugten Ausführungsform wird jedoch die Polyisocyanatverbindung in einer solchen Menge eingesetzt, dass
- das NCO/µ-Äquivalent-Verhältnis bzgl. der freien gegenüber Isocyanaten reaktiven Gruppen µ im Umsetzungsprodukt von Isocyanatkomponente (E) und Reaktivkomponente (A) 1,0 bis 3,0 beträgt
- das NCO/µ-Äquivalent-Verhältnis bzgl. der freien gegenüber Isocyanaten reaktiven Gruppen µ im Umsetzungsprodukt mit Reaktivkomponente (D) 0,3 bis 2,0 beträgt
   bzw. dass
- das NCO/µ-Äquivalent-Verhältnis bzgl. der freien gegenüber Isocyanaten reaktiven Gruppen µ im Umsetzungsprodukt von Isocyanatkomponente (E) und Reaktivkomponente (D) 1,0 bis 3,0 beträgt
- das NCO/µ-Äquivalent-Verhältnis bzgl. der freien gegenüber Isocyanaten reaktiven Gruppen µ im Umsetzungsprodukt aus Stufe a) mit Reaktivkomponente (D) 0,5 bis 2,0 beträgt

Die Reaktion kann auch wie folgt durchgeführt werden:
- Umsetzung mit der Polyisocyanatkomponente (E) mit einer hydrophilen Komponente (A) ohne Lösemittel im Temperaturenbereich von 20 bis 150 °C
- anschließende Zugabe der hydrophoben Komponente (D) bei Temperaturen von 20 bis 150 °C und
- Fertigreaktion des Umsetzungsproduktes aus Stufe b) mit der Komponente (A) bei Temperaturen von 20 bis 150 °C.
   oder
   - Umsetzung mit der Polyisocyanatkomponente (E) mit einer hydrophoben Komponente (D) ohne Lösemittel im Temperaturenbereich von 20 bis 150 °C und
   - Fertigreaktion des Umsetzungsproduktes aus Stufe d) mit der Komponente (A) bei Temperaturen von 20 bis 150 °C.

Vorzugsweise erfolgt die Umsetzung der Isocyanatkomponente (E) mit der Reaktivkomponente (A) und/ oder (G) bei Temperaturen von 20 bis 150 °C, wobei die Reaktion ggf. in Gegenwart eines Katalysators erfolgen kann. So hat es sich als besonders vorteilhaft erwiesen, bei der Umsetzung der Isocyanatkomponente (A) mit den Reaktivkomponenten (A) und/oder (D) auf Katalysatoren, wie z.B. Dibutylzinndilaurat (T12-DBTL), zurückzugreifen.

Falls das Adsorptionsblockermolekül mindestens zwei D, E und/oder A enthält, kann gesagt werden, dass innerhalb des Adsorptionsblockermoleküls D, E und A jeweils gleich oder verschieden sein können.

In einer besonders bevorzugten Ausführungsform der Erfindung liegt das hydraulische Bindemittel als Zement vor.

Normalerweise liegt der Zuschlag in Form von Sand, Kies und/oder mineralischen Steinen vor.

Häufig sind die Säuremonomerstruktureinheiten des sich als Fließmittel eignenden Copolymers gemäß einer der allgemeinen Formeln (Ia), (Ib), (Ic) und/oder (Id) 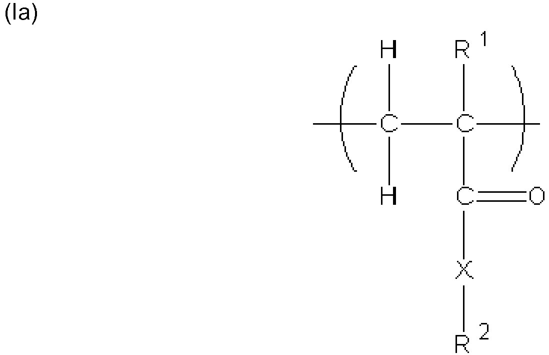 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 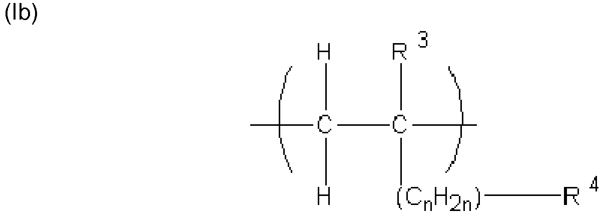
mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 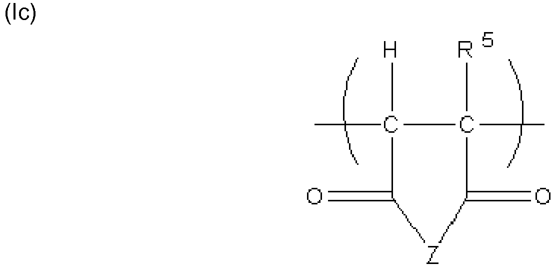
mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 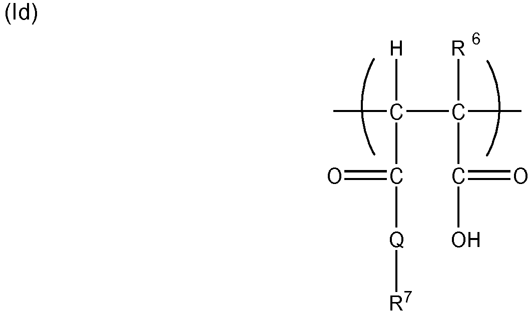
mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(T'O)_{α} -R⁹ mit m = 0, 1, 2, 3 oder 4, e = 0, 1, 2, 3 oder 4, T' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Häufig liegt das die Säuremonomerstruktureinheiten erzeugende Säuremonomer als Methacrylsäure, Acrylsäure, Maleinsäure, Maleinsäureanhydrid, als Halbester der Maleinsäure oder als eine Mischung aus mehreren dieser Spezies vor.

In der Regel sind die Polyethermakromonomerstruktureinheiten des sich als Fließmittel eignenden Copolymers gemäß einer der allgemeinen Formeln (IIa), (IIb) und/oder (IIc) 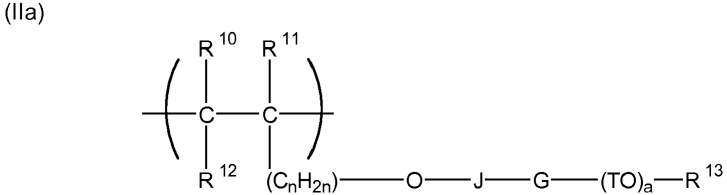 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
J gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit; G gleich oder verschieden sowie repräsentiert durch O, NH und/oder CO-NH mit der Maßgabe, dass falls J eine nicht vorhandene Einheit ist, G auch als eine nicht vorhandene Einheit vorliegt;
T gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 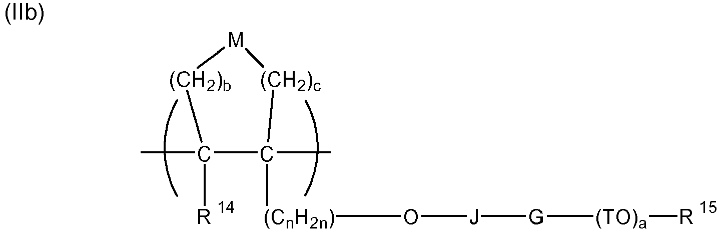
mit
R¹⁴ gleich oder verschieden sowie repräsentiert durch H und/oder eine unverzweigte oder verzweigte C₁ - C₄ Alkylgruppe;
J gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls J eine nicht vorhandene Einheit ist, G auch als eine nicht vorhandene Einheit vorliegt;
T gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
M gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn M NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 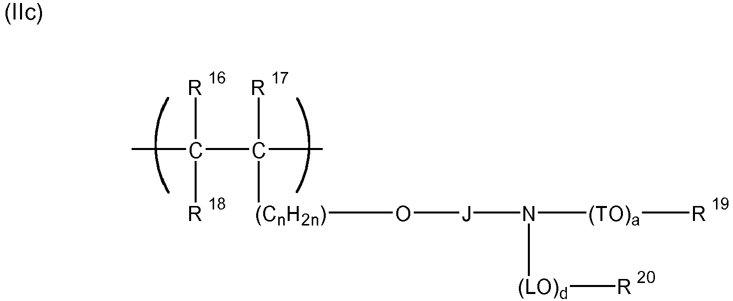
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
J gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nicht vorhandene Einheit;
T gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆-H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Häufig liegt das die Polyethermakromonomerstruktureinheit erzeugende Polyethermakromonomer als alkoxyliertes Isoprenol, alkoxylierter Hydroxybutylvinylether, alkoxylierter (Meth-)allylalkohol und/oder vinyliertes Methylpolyalkoxylenglykol mit bevorzugt jeweils einer arithmetischen mittleren Zahl an Oxyalkylengruppen von 4 bis 400 vor.

Das sich als Fließmittel eignende, Polyethermakromonomerstruktureinheiten und Säuremonomerstruktureinheiten aufweisende Copolymer kann noch eine weitere Struktureinheit aufweisen, die gemäß der allgemeinen Formeln (IIIa) und/oder (IIIb) vorliegt 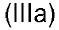 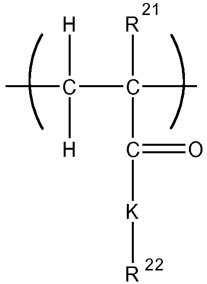 mit
R²¹ gleich oder verschieden sowie repräsentiert durch H und/oder eine unverzweigte oder verzweigte C₁ - C₄ Gruppe;
K gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe; 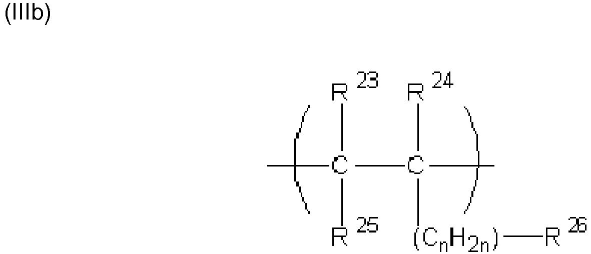
mit
R²³, R²⁴ und R²⁵ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

Üblicherweise liegt in dem sich als Fließmittel eignenden Copolymer ein arithmetisch mittleres molares Verhältnis von Säuremonomerstruktureinheiten zu Polyethermakromonomerstruktureinheiten von 20 : 1 bis 1 : 1, bevorzugt von 12 : 1 bis 1 : 1 vor.

In der Regel liegen insgesamt mindestens 45 Mol-%, bevorzugt jedoch mindestens 80 Mol-% aller Struktureinheiten des sich als Fließmittel eignenden Copolymers als Säuremonomerstruktureinheiten und/oder als Polyethermakromonomerstruktureinheiten vor.

Die Erfindung betrifft außerdem eine Baustoffrezeptur enthaltend Wasser sowie die vorstehend beschriebene Baustoffmischung.

Weiterhin betrifft die Erfindung ein Bauwerk hergestellt unter Verwendung dieser Baustoffrezeptur.

Die Erfindung soll nachstehend anhand ausgewählter Beispiele näher erläutert werden.

### Beispiel 1 (Blocker 1):

In einem 250 mL-Dreihalsglaskolben mit Tropftrichter, Rührer und Inertgasanschluss werden 29,2g (57,9 mmol) trimeres Hexamethylendiisocaynat (Desmodur® N3600) mit 0,11 g Dibutylzinndilaureat (T-12 DBTL) bei 40 °C vorgelegt. Unter Rühren werden binnen 20 Minuten 115,8 g (57,9 mmol) Methylpolyethylenglykol mit einer mittleren Molmasse von 2000 g·mol⁻¹ heiß zugetropft. Danach wird 25 Min. bei 45 - 50 °C gerührt und anschließend binnen 20 Min. 61,6 g (57,9 mmol) Polyisobutenamin mit einer mittleren Molmasse von 750 g·mol⁻¹ (Kerocom® PIBA 03 BV) zudosiert. Man gibt nun 11,6 g (28,9 mmol) Polypropylenglykol mit einer mittleren Molmasse von 400 g·mol⁻¹ zu, erwärmt danach die Reaktionsmischung auf 80 °C und rührt weitere 4 h bei dieser Temperatur. Anschließend wird das Reaktionsprodukt in 509g Wasser eingebracht und unter Rühren emulgiert. Man erhält eine milchig weiße Emulsion mit einem Feststoffgehalt von 30 %.

### Beispiel 2 (Blocker 2):

In einem 250 mL-Dreihalsglaskolben mit Tropftrichter, Rührer und Inertgasanschluss werden 11,5 g (64,7 mmol) trimeres Hexamethylendiisocaynat (Desmodur® N3600) mit 0,08 g Dibutylzinndilaureat (T-12 DBTL) bei Raumtemperatur vorgelegt. Unter Rühren werden binnen 20 Minuten 115,8 g (46,0 mmol) eines Butylpoly-stat-(ethylen-propylen)-glykols mit einer mittleren Molmasse von 2500 g·mol⁻¹ heiß zugetropft. Danach wird 25 Min. bei 45 - 50 °C gerührt und anschließend 36,4 g (23,0 mmol) Polyisobutenamin mit einer mittleren Molmasse von 750 g·mol⁻¹ (Kerocom® PIBA 03 BV) zudosiert. Anschließend wird die Reaktionsmischung auf 80 °C erwärmt und 4 Stunden bei dieser Temperatur gerührt. Das Reaktionsprodukt wird in 651 g Wasser eingebracht und unter Rühren emulgiert. Man erhält eine milchig weiße Emulsion mit einem Feststoffgehalt von 20 %.

### Beispiel 3 (Blocker 3):

In einem 500 mL-Dreihalsglaskolben mit Tropftrichter, Rührer und Inertgasanschluss werden 32,36 g (64,2 mmol) trimeres Hexamethylendiisocaynat (Desmodur® N3600) mit 0,08 g Dibutylzinndilaureat (T-12 DBTL) bei Raumtemperatur vorgelegt. Unter Rühren werden binnen 20 Minuten 192,6 g (64,2 mmol) eines Methylpolyethylenglykols mit einer mittleren Molmasse von 3000 g·mol⁻¹ heiß zugetropft. Danach wird 25 Min. bei 45 - 50°C gerührt und anschließend 44,1 g (42,8 mmol) Polyisobutenamin mit einer mittleren Molmasse von 750 g·mol⁻¹ (Kerocom® PIBA 03 BV) zudosiert. Nach Ende des Zutropfens werden 25,68 (42,8 mmol) eines Polyethylenglykols mit einer mittleren Molmasse von 600 g·mol⁻¹ zugeben und die Reaktionsmischung auf 90°C erwärmt. Anschließend wird die Reaktionsmischung 4h Stunden bei dieser Temperatur gerührt. Das Reaktionsprodukt wird in 1179g Wasser eingebracht und unter Rühren emulgiert. Man erhält eine milchig weiße Emulsion mit einem Feststoffgehalt von 20 %.

### Anwendungstests der in Beispiel 1 - 3 beschriebenen Polymere:

Die in den Beispielen 1 - 3 hergestellten Adsorptionsblocker wurden auf Ihre Anwendungseigenschaften in zementären Systemen getestet. Zunächst kann ein Screening in speziell angepassten Mörtelsystemen erfolgen. Hierbei wurden die Sande mit einem Sieb der Lochmaschenweite 1mm gesiebt und nur der Siebdurchgang für die Mörtelmischung verwendet.

Für diese Mörtelversuche wurden folgende Mischungen verwendet:

| | |
|---|---|
| - Zement CPC 40 : | 130,0 g |
| - Sand 0 -1 mm: | 171 g |
| - Wasser: | 81,8 g (w/z-Wert: 0,63) |
| - Fließmittel: | Glenium SKY ® 591 (BASF): Dosierung 1,0 % bezogen auf die Zementeinwaage |

Alle verwendeten Sande (im folgenden Sand 1, Sand 2 und Sand 3 genannt) sind gebrochene Sande vulkanischen Ursprungs und enthalten Anteile von quellfähigen Tonen (röntgendiffraktometrisch nachgewiesen). Diese Sande haben sich als äußerst adsorptiv gegenüber Polycarboxylat basierenden Fließmitteln herausgestellt.

Die Mörtelmischung wurde wie folgt zubereitet: In einem Standardmörtelmischer der Firma Hobart wurden zunächst die oben beschriebenen Mengen Zement, Sand 0 - 1mm, die beschriebene Menge Wasser sowie gegebenenfalls der Adsorptionsblocker 2 Minuten verrührt. Danach wurde das Fließmittel zugegeben und eine weitere Minute gemischt. Zur Quantifizieung der Wirkung des Adsorptionsblockers wurde eine definierte Menge der Mörtelmischung in einen Konus (Maße: oberer/unterer innerer Durchmesser 1,5 / 3,5 cm; Höhe 6,0 cm) eingefüllt und nach Abziehen des Konus das Ausbreitmaß des Mörtels bestimmt.

In den folgenden 3 Beispielen soll die Wirkung der erfindungsgemäßen Adsorptionsblocker verdeutlicht werden:

**Mischung mit Sand 1:**

| Adsorptionsblocker | Dosierung / %¹ | Ausbreitmaß / cm | | | | Δ 60min / cm |
|---|---|---|---|---|---|---|
| | | 4 min | 10 min | 30 min | 60 min | |
| Referenz | 0% | 16,1 | 14,6 | 13,8 | 12,9 | 3,2 |
| Blocker 1 | 0,15% | 15,1 | 14,1 | 13,5 | 12,7 | 2,4 |
| Blocker 2 | 0,15% | 15,2 | 14,5 | 13,7 | 13,4 | 1,8 |
| Blocker 3 | 0,15% | 15,0 | 14,3 | 13,8 | 13,7 | 1,3 |

| | | | | | | |
|---|---|---|---|---|---|---|
| ¹ Polymerdosierung bezogen auf die Sandeinwaage | | | | | | |

**Mischung mit Sand 2:**

| Adsorptionsblocker | Dosierung / %¹ | Ausbreitmaß / cm | | | | Δ 60min / cm |
|---|---|---|---|---|---|---|
| | | 4 min | 10 min | 30 min | 60 min | |
| Referenz | 0% | 12,9 | 10,7 | 8,8 | < 6,0 | > 6,9 |
| Blocker 1 | 0,15% | 12,4 | 10,2 | 8,4 | < 6,0 | > 6,4 |
| Blocker 2 | 0,15% | 12,6 | 10,4 | 8,9 | 6,9 | 5,7 |
| Blocker 3 | 0,15% | 13,8 | 11,1 | 9,6 | 6,7 | 5,1 |

| | | | | | | |
|---|---|---|---|---|---|---|
| ¹ Polymerdosierung bezogen auf die Sandeinwaage | | | | | | |

**Mischung mit Sand 3:**

| Adsorptionsblocker | Dosierung / %¹ | Ausbreitmaß / cm | | | | Δ 60min / cm |
|---|---|---|---|---|---|---|
| | | 4 min | 10 min | 30 min | 60 min | |
| Referenz | 0% | 12,4 | 10,7 | 9,3 | 8,5 | 3,9 |
| Blocker 1 | 0,15% | 13,1 | 11,5 | 10,7 | 9,9 | 3,2 |
| Blocker 2 | 0,15% | 12,3 | 11,1 | 10,2 | 9,7 | 2,6 |
| Blocker 3 | 0,15% | 13,0 | 11,4 | 10,5 | 10,0 | 3,0 |

| | | | | | | |
|---|---|---|---|---|---|---|
| ¹ Polymerdosierung bezogen auf die Sandeinwaage | | | | | | |

Durch Verwendung der Adsorptionsblocker kann in allen Fällen eine deutliche Verbesserung der Konsistenzhaltung erzielt werden.

Die Eigenschaften des in Beispiel 3 beschriebenen erfindungsgemäßen Adsorptionsblocker 3 wurde exemplarisch in einer Betonrezeptur ausgetestet. Hierzu wurde der in den vorhergehenden Beispielen beschriebene Sand 1 ohne vorherige Absiebung verwendet. Als Grobzuschlag wurden gebrochene, vulkanische Grobzuschläge der Körnung 4 -22,4 mm verwendet. Diese Grobzuschläge entstammen aus der gleichen Region wie der verwendete Sand und weisen durch den Brechvorgang ebenfalls einen deutlichen Feinanteil auf (< 4mm: 5 % des gesamten Sandgewichts).

Folgende Mischungsrezeptur wurde verwendet:

| Mischungsbestandteil | Menge |
|---|---|
| Zement CPC 40 | 260 kg/m³ |
| Sand 1 (0 - 4 mm) | 700 kg/m³ |
| Zuschlag 1 (4 -22,4 mm) | 861 kg/m³ |
| Wasser | 166,4 kg/m³ |
| Fließmittel Glenium Sky ®591 | 0,95 kg/m³ |
| Blocker 1 | 1,05 kg/m³ |

Dabei wurden der Sand und der Zuschlag 24 h vor Verwendung mit Wasser gesättigt und anschließend der Beton wie folgt hergestellt:
Sand 1 und Zuschlag 1 wurden zusammen mit 30 % des Wassers und dem Adsorptionsblocker 2 Minuten in Zwangsmischern der Firma Zyklos vermischt. Anschließend wurden der Zement und die verbliebenen 70 % des Wassers zugegeben und 1 Minute gemischt. Die Herstellung der Referenzmischung erfolge in analoger Weise, jedoch ohne Zugabe eines Adsorptionsblockers.

Danach wurde das Fließmittel zugeben und 1 Minute gemischt.

Die Eigenschaften des Frischbetons wurden nach ASTM C 143 bestimmt (Slump). Folgende Werte konnten ermittelt werden:

| Blocker | Blocker | Slump / cm | | | | Comp.Str. |
|---|---|---|---|---|---|---|
| | Dos. / % | 0 min | 10 min | 30 min | 60 min | 24h / MPa |
| Referenz | 0,00 % | 10,5 | 8,0 | | | 8,0 |
| Blocker 1 | 0,20 % | 20 | 19 | 18 | 12 | 8,0 |
| Blocker 2 | 0,20 % | 22 | 22 | 19 | 18 | 7,5 |
| Blocker 3 | 0,15 % | 22 | 21 | 20,5 | 20 | 8,0 |

Obige Beispiele machen die drastische Verbesserung des Konsistenzerhalts unter Verwendung der erfindungsgemäßen Adsorptionsblocker deutlich. Ohne Verwendung eines Adsorptionsblockers ist der Konsistenzverlust über die Zeit sehr groß. Die mechanischen Festigkeiten des Betons werden durch die Adsorptionsblocker nicht negativ beeinflusst.

## Patentansprüche

1. Baustoffmischung enthaltend
a) 2,0 bis 30,0 Gew.-% eines hydraulischen Bindemittels,
b) 69,0 bis 97,0 Gew.-% Zuschlag, wobei der Zuschlag in Form von Sand, Kies und/oder mineralischen Steinen vorliegt,
c) 0,005 bis 0,5 Gew.-% eines sich als Fließmittel eignendes, Polyethermakromonomerstruktureinheiten und Säuremonomerstruktureinheiten aufweisendes Copolymer und
d) 0,005 bis 0,5 Gew.-% einer sich als Adsorptionsblocker eignenden, makromolekularen, amphiphilen Verbindung,
wobei die sich als Adsorptionsblocker eignende makromolekulare, amphiphile Verbindung als Basisbaustein eine aus der Umsetzung der Einzelkomponenten D, E und A hervorgehende Struktureinheit D-E-A aufweist,
mit
E repräsentiert durch eine Verbindung aufweisend mindestens zwei reaktive Isocyanatgruppen,
D repräsentiert durch eine hydrophobe Verbindung mit mindestens einer gegenüber Isocyanaten reaktiven Gruppe, ausgewählt aus -OH, -NH₂, wobei die hydrophobe Verbindung ein Alkylpolyoxyalkylenderivat oder Polyisobutenderivat ist und die Wasserlöslichkeit der hydrophoben Verbindung bei einer Temperatur von 20 ° C bei Atmosphärendruck weniger als 1 g/l beträgt,
A repräsentiert durch eine hydrophile Verbindung mit mindestens einer gegenüber Isocyanaten reaktiven Gruppe, ausgewählt aus -OH, -NH₂, -COOH, wobei die Wasserlöslichkeit der hydrophilen Verbindung bei einer Temperatur von 20 ° C bei Atmosphärendruck mehr als 10g/l beträgt,
mit der Maßgabe, dass die Umsetzung der Einzelkomponenten D, E und A durch Reaktion der reaktiven Isocyanatgruppen mit den gegenüber Isocyanaten reaktiven Gruppen erfolgt.

2. Baustoffmischung nach Anspruch 1 enthaltend
a) 4,0 bis 20,0 Gew.-% eines hydraulischen Bindemittels,
b) 79,5 bis 95,5 Gew.-% Zuschlag, wobei der Zuschlag in Form von Sand, Kies und/oder mineralischen Steinen vorliegt,
c) 0,01 bis 0,25 Gew.-% eines sich als Fließmittel eignendes, Polyethermakromonomerstruktureinheiten und Säuremonomerstruktureinheiten aufweisendes Copolymer und
d) 0,01 bis 0,25 Gew.-% einer sich als Adsorptionsblocker eignenden, makromolekularen, amphiphilen Verbindung.

3. Baustoffmischung nach Anspruch 1 oder 2, **dadurch gekennzeichnet, dass** die sich als Adsorptionsblocker eignende, makromolekulare, amphiphile Verbindung gemäß einem der Strukturtypen 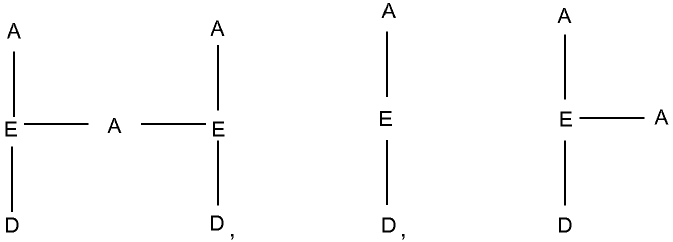 und/oder 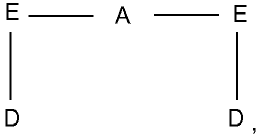 vorliegt.

4. Baustoffmischung nach Anspruch 1 oder 2, **dadurch gekennzeichnet, dass** die sich als Adsorptionsblocker eignende, makromolekulare, amphiphile Verbindung gemäß einem Strukturtypen vorliegt, der zwei 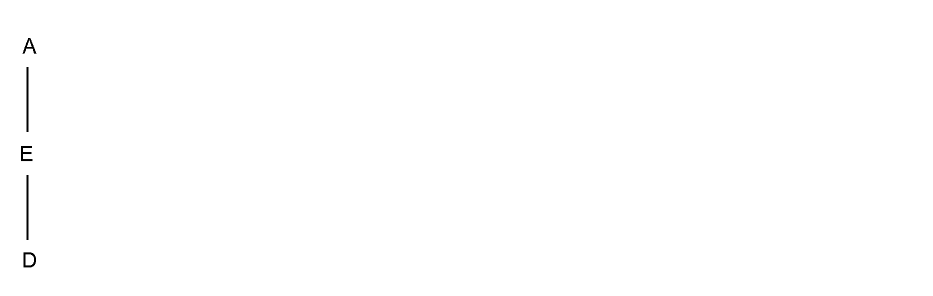 Einheiten aufweist, welche jeweils über die Einzelkomponente E durch ein polymeres Zwischenglied aufgrund von Reaktion von Isocyanatgruppen der Einzelkomponenten E mit gegenüber Isocyanaten reaktiven Gruppen des polymeren Zwischenglieds miteinander verbrückt sind, wobei das polymere Zwischenglied Ethergruppen enthält und ein Molekulargewicht von 400 bis 50000 bevorzugt von 1000 bis 25000 Gew.% aufweist.

5. Baustoffmischung nach einem der Ansprüche 1 bis 4, **dadurch gekennzeichnet, dass** die Einzelkomponente A in Form eines Methylpolyethylenglykols oder in Form eines Polypropylenglykols vorliegt.

6. Baustoffmischung nach einem der Ansprüche 1 bis 5, **dadurch gekennzeichnet, dass** die Einzelkomponente D als Polyisobutenamin vorliegt.

7. Baustoffmischung nach einem der Ansprüche 1 bis 6, **dadurch gekennzeichnet, dass** die Einzelkomponente E in Form von drei reaktive Isocyanatgruppen enthaltendem trimerem Polyisocyanat vorliegt.

8. Baustoffmischung nach einem der Ansprüche 1 bis 7, **dadurch gekennzeichnet, dass** das hydraulische Bindemittel als Zement vorliegt.

9. Baustoffmischungen nach einem der Ansprüche 1 bis 8, **dadurch gekennzeichnet, dass** die Säuremonomerstruktureinheiten des sich als Fließmittel eignenden Copolymers gemäß einer der allgemeinen Formeln (Ia), (Ib), (Ic) und/oder (Id) sind 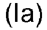 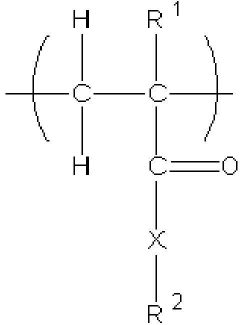 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ,) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 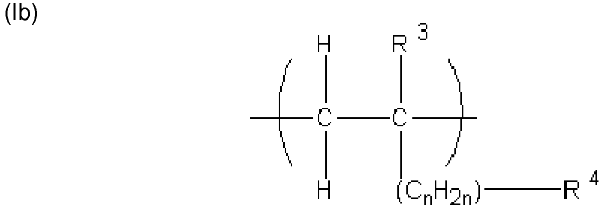
mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 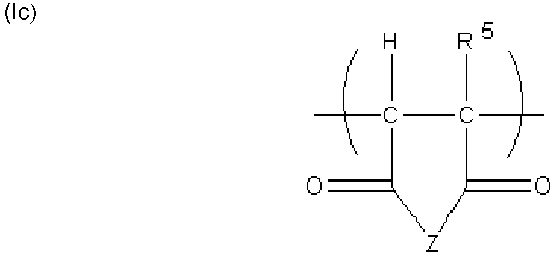
mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 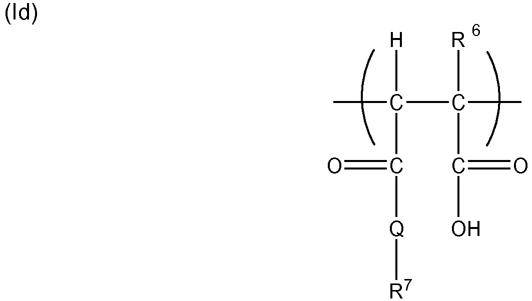
mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂,)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(T'O)_{α} -R⁹ mit m = 0, 1, 2, 3 oder 4, e = 0, 1, 2, 3 oder 4, T' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

10. Baustoffmischung nach einem der Ansprüche 1 bis 9, **dadurch gekennzeichnet, dass** das die Säuremonomerstruktureinheiten erzeugende Säuremonomer als Methacrylsäure, Acrylsäure, Maleinsäure, Maleinsäureanhydrid, als Halbester der Maleinsäure oder als eine Mischung aus mehreren dieser Spezies vorliegt.

11. Baustoffmischung nach einem der Ansprüche 1 bis 10, **dadurch gekennzeichnet, dass** die Polyethermakromonomerstruktureinheiten des sich als Fließmittel eignenden Copolymers gemäß einer der allgemeinen Formeln (IIa), (IIb) und/oder (IIc) sind 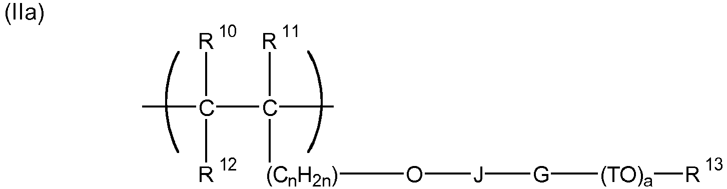 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
J gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls J eine nicht vorhandene Einheit ist, G auch als eine nicht vorhandene Einheit vorliegt;
T gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 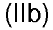 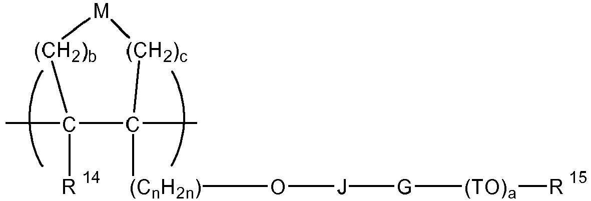
mit
R¹⁴ gleich oder verschieden sowie repräsentiert durch H und/oder eine unverzweigte oder verzweigte C₁ - C₄ Alkylgruppe;
J gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls J eine nicht vorhandene Einheit ist, G auch als eine nicht vorhandene Einheit vorliegt;
T gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
M gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn M NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 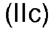 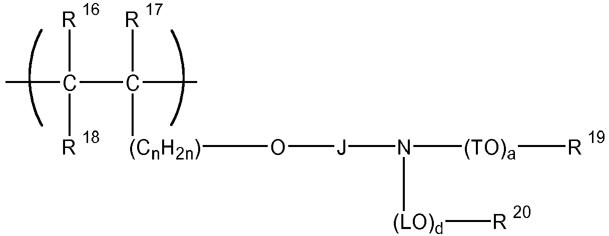
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
J gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nicht vorhandene Einheit;
T gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆-H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

12. Baustoffmischung nach einem der Ansprüche 1 bis 11, **dadurch gekennzeichnet, dass** das die Polyethermakromonomerstruktureinheit erzeugende Polyethermakromonomer als alkoxyliertes Isoprenol, alkoxylierter Hydroxybutylvinylether, alkoxylierter (Meth-)allylalkohol und/oder vinyliertes Methylpolyalkoxylenglykol mit bevorzugt jeweils einer arithmetischen mittleren Zahl an Oxyalkylengruppen von 4 bis 400 vorliegt.

13. Baustoffmischung nach einem der Ansprüche 1 bis 12, **dadurch gekennzeichnet, dass** das sich als Fließmittel eignende, Polyethermakromonomerstruktureinheiten und Säuremonomerstruktureinheiten aufweisende Copolymer noch eine weitere Struktureinheit aufweist, die gemäß der allgemeinen Formeln (IIIa) und/oder (IIIb) vorliegt 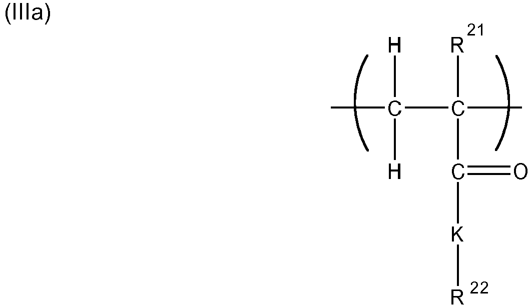 mit
R²¹ gleich oder verschieden sowie repräsentiert durch H und/oder eine unverzweigte oder verzweigte C₁ - C₄ Gruppe;
K gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe; 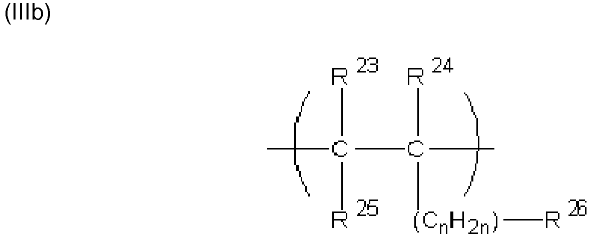
mit
R²³, R²⁴ und R²⁵ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

14. Baustoffmischung nach einem der Ansprüche 1 bis 13, **dadurch gekennzeichnet, dass** in dem sich als Fließmittel eignenden Copolymer ein arithmetisch mittleres molares Verhältnis von Säuremonomerstruktureinheiten zu Polyethermakromonomerstruktureinheiten von 20 : 1 bis 1 : 1, bevorzugt von 12 : 1 bis 1 : 1 vorliegt.

15. Baustoffmischung nach einem der Ansprüche 1 bis 14, **dadurch gekennzeichnet, dass** insgesamt mindestens 45 Mol-%, bevorzugt jedoch mindestens 80 Mol-% aller Struktureinheiten des sich als Fließmittel eignenden Copolymers als Säuremonomerstruktureinheiten und/oder als Polyethermakromonomerstruktureinheiten vorliegen.

16. Baustoffrezeptur enthaltend Wasser sowie eine Baustoffmischung gemäß einem der Ansprüche 1 bis 15.

17. Bauwerk hergestellt unter Verwendung einer Baustoffrezeptur gemäß Anspruch 16.

## Claims

1. Building material mixture containing
a) 2.0 to 30.0% by weight of a hydraulic binder,
b) 69.0 to 97.0% by weight of aggregate, the aggregate being present in the form of sand, gravel and/or mineral stones,
c) 0.005 to 0.5% by weight of a copolymer suitable as a plasticizer and having polyether macromonomer structural units and acid monomer structural units and
d) 0.005 to 0.5% by weight of a macromolecular, amphiphilic compound suitable as an adsorption blocker,
the macromolecular, amphiphilic compound suitable as an adsorption blocker having, as a base building block, a structural unit D-E-A arising from the reaction of the individual components D, E and A,
with
E represented by a compound having at least two reactive isocyanate groups,
D represented by a hydrophobic compound having at least one group reactive towards isocyanates, selected from -OH, -NH₂, where the hydrophobic compound is an alkylpolyoxyalkylene derivative or a polyisobutene derivative and the water solubility of the hydrophobic compound is less than 1 g/l at a temperature of 20°C under atmospheric pressure,
A represented by a hydrophilic compound having at least one group reactive towards isocyanates, selected from -OH, -NH₂, -COOH, where the water solubility of the hydrophilic compound is more than 10 g/l at a temperature of 20°C under atmospheric pressure,
with the proviso that the reaction of the individual components D, E and A takes place by reaction of the reactive isocyanate groups with the groups reactive towards isocyanates.

2. Building material mixture according to Claim 1, containing
a) 4.0 to 20.0% by weight of a hydraulic binder,
b) 79.5 to 95.5% by weight of aggregate, the aggregate being present in the form of sand, gravel and/or mineral stones,
c) 0.01 to 0.25% by weight of a copolymer suitable as a plasticizer and having polyether macromonomer structural units and acid monomer structural units and
d) 0.01 to 0.25% by weight of a macromolecular, amphiphilic compound suitable as an adsorption blocker.

3. Building material mixture according to Claim 1 or 2, **characterized in that** the macromolecular, amphiphilic compound suitable as an adsorption blocker is present according to one of the structure types 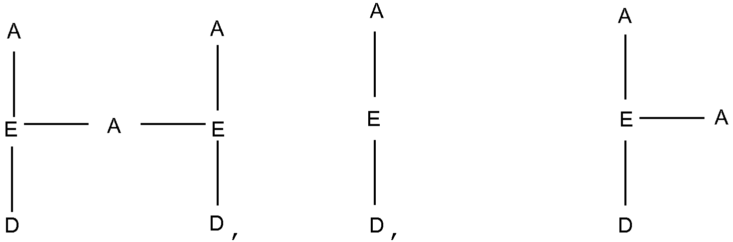 and/or

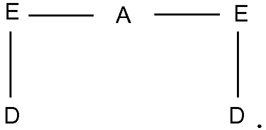

4. Building material mixture according to Claim 1 or 2, **characterized in that** the macromolecular, amphiphilic compound suitable as an adsorption blocker is present according to a structure type which has two 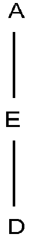 units which in each case are bridged with one another via the individual component E by a polymeric intermediate link owing to reaction of isocyanate groups of the individual components E with those groups of the polymeric intermediate link which are reactive towards isocyanates, the polymeric intermediate link containing ether groups and having a molecular weight of 400 to 50000, preferably of 1000 to 25000, % by weight.

5. Building material mixture according to any of Claims 1 to 4, **characterized in that** the individual component A is present in the form of a methylpolyethylene glycol or in the form of a polypropylene glycol.

6. Building material mixture according to any of Claims 1 to 5, **characterized in that** the individual component D is present as a polyisobutenamine.

7. Building material mixture according to any of Claims 1 to 6, **characterized in that** the individual component E is present in the form of trimeric polyisocyanate containing three reactive isocyanate groups.

8. Building material mixture according to any of Claims 1 to 7, **characterized in that** the hydraulic binder is present as cement.

9. Building material mixtures according to any of Claims 1 to 8, **characterized in that** the acid monomer structural units of the copolymer suitable as a plasticizer are according to one of the general formulae (Ia), (Ib), (Ic) and/or (Id) 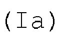 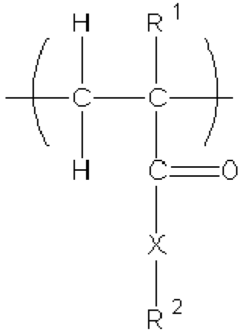 with
R¹ identical or different and represented by H and/or a straight-chain or branched C₁ - C₄ alkyl group;
X identical or different and represented by NH- (CₙH₂ₙ) with n = 1, 2, 3 or 4 and/or O-(CₙH₂ₙ) with n = 1, 2, 3 or 4 and/or by a unit not present;
R² identical or different and represented by OH, SO₃H, PO₃H₂, O-PO₃H₂ and/or para-substituted C₆H₄-SO₃H, with the proviso that, if X is a unit not present, R² is represented by OH; 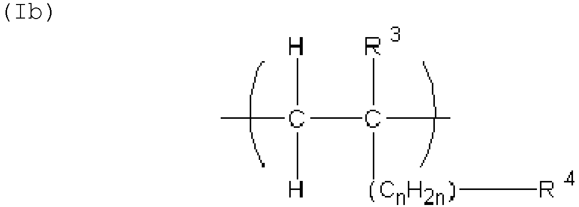
with
R³ identical or different and represented by H and/or a straight-chain or branched C₁ - C₄ alkyl group;
n = 0, 1, 2, 3 or 4
R⁴ identical or different and represented by SO₃H, PO₃H₂, O-PO₃H₂ and/or para-substituted C₆H₄-SO₃H; 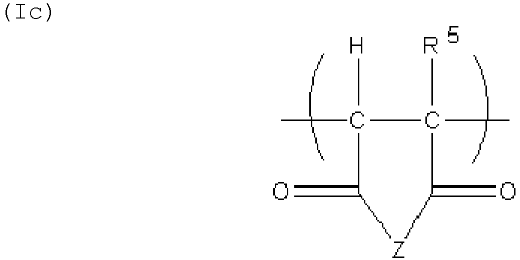
with
R⁵ identical or different and represented by H and/or a straight-chain or branched C₁ - C₄ alkyl group;
Z identical or different and represented by O and/or NH; 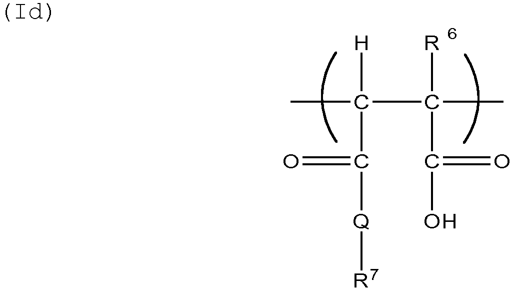
with
R⁶ identical or different and represented by H and/or a straight-chain or branched C₁ - C₄ alkyl group;
Q identical or different and represented by NH and/or O;
R⁷ identical or different and represented by H, (CₙH₂ₙ) -SO₃H with n = 0, 1, 2, 3 or 4, (CₙH₂ₙ) -OH with n = 0, 1, 2, 3 or 4; (CₙH₂ₙ) -PO₃H₂ with n = 0, 1, 2, 3 or 4, (CₙH₂ₙ)-OPO₃H₂ with n = 0, 1, 2, 3 or 4, (C₆H₄)-SO₃H, (C₆H₄)-PO₃H₂, (C₆H₄)-OPO₃H₂ and/or (CₘH₂ₘ)ₑ-O-(T'O)_{α}-R⁹ with m = 0, 1, 2, 3 or 4, e = 0, 1, 2, 3 or 4, T' = C_{x'}H_{2x'} with x' = 2, 3, 4 or 5 and/or CH₂C(C₆H₅)H-, α = an integer from 1 to 350 with R⁹ identical or different and represented by a straight-chain or branched C₁ - C₄ alkyl group.

10. Building material mixture according to any of Claims 1 to 9, **characterized in that** the acid monomer producing the acid monomer structural units is present as methacrylic acid, acrylic acid, maleic acid or maleic anhydride, as a monoester of maleic acid or as a mixture of a plurality of these species.

11. Building material mixture according to any of Claims 1 to 10, **characterized in that** the polyether macromonomer structural units of the copolymer suitable as a plasticizer are according to one of the general formulae (IIa), (IIb) and/or (IIc) 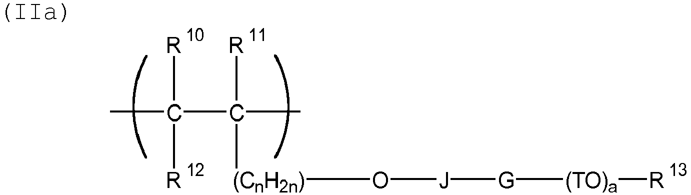 with
R¹⁰, R¹¹ and R¹² in each case identical or different and, independently of one another, represented by H and/or a straight-chain or branched C₁ - C₄ alkyl group;
J identical or different and represented by a straight-chain or branched C₁ - C₆ alkylene group, a cyclohexyl group, CH₂-C₆H₁₀, ortho-, meta- or para-substituted C₆H₄ and/or a unit not present;
G identical or different and represented by O, NH and/or CO-NH, with the proviso that, if J is a unit not present, G is also present as a unit not present;
T identical or different and represented by CₓH₂ₓ with x = 2, 3, 4 and/or 5 (preferably x = 2) and/or CH₂CH (C₆H₅) ;
n identical or different and represented by 0, 1, 2, 3, 4 and/or 5;
a identical or different and represented by an integer from 2 to 350 (preferably 10 - 200);
R¹³ identical or different and represented by H, a straight-chain or branched C₁ - C₄ alkyl group, CO-NH₂, and/or COCH₃; 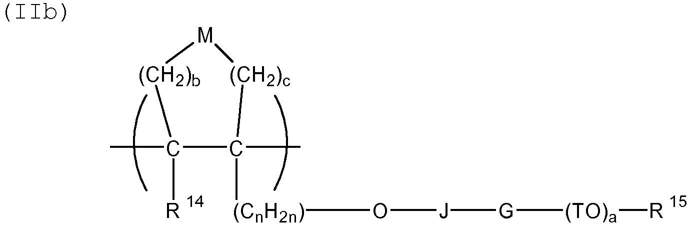
with
R¹⁴ identical or different and represented by H and/or a straight-chain or branched C₁ - C₄ alkyl group;
J identical or different and represented by a straight-chain or branched C₁ - C₆ alkylene group, a cyclohexyl group, CH₂-C₆H₁₀, ortho-, meta- or para-substituted C₆H₄ and/or by a unit not present;
G identical or different and represented by a unit not present, O, NH and/or CO-NH, with the proviso that, if J is a unit not present, G is also present as a unit not present;
T identical or different and represented by CₓH₂ₓ with x = 2, 3, 4 and/or 5 and/or CH₂CH(C₆H₅);
n identical or different and represented by 0, 1, 2, 3, 4 and/or 5;
a identical or different and represented by an integer from 2 to 350;
M identical or different and represented by a unit not present, NH and/or O, with the proviso that, if D is a unit not present: b = 0, 1, 2, 3 or 4 and c = 0, 1, 2, 3 or 4, where b + c = 3 or 4, and with the proviso that, if M is NH and/or O: b = 0, 1, 2 or 3, c = 0, 1, 2 or 3, where b + c = 2 or 3;
R¹⁵ identical or different and represented by H, a straight-chain or branched C₁ - C₄ alkyl group, CO-NH₂, and/or COCH₃; 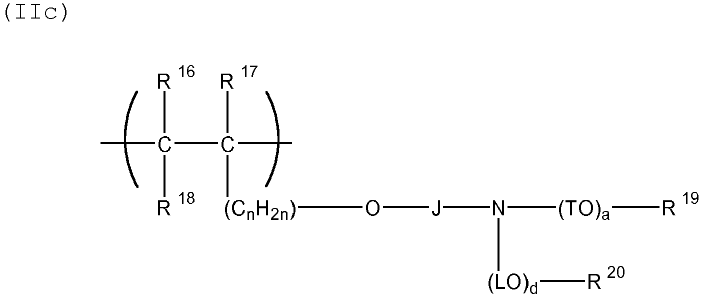
with
R¹⁶, R¹⁷ and R¹⁸ in each case identical or different and, independently of one another, represented by H and/or a straight-chain or branched C₁ - C₄ alkyl group;
J identical or different and represented by a straight-chain or branched C₁ - C₆ alkylene group, a cyclohexyl group, CH₂-C₆H₁₀, ortho-, meta- or para-substituted C₆H₄ and/or by a unit not present;
T identical or different and represented by CₓH₂ₓ with x = 2, 3, 4 and/or 5 and/or CH₂CH(C₆H₅);
n identical or different and represented by 0, 1, 2, 3, 4 and/or 5;
L identical or different and represented by CₓH₂ₓ with x = 2, 3, 4 and/or 5 and/or CH₂-CH (C₆H₅) ;
a identical or different and represented by an integer from 2 to 350;
d identical or different and represented by an integer from 1 to 350;
R¹⁹ identical or different and represented by H and/or a straight-chain or branched C₁ - C₄ alkyl group,
R²⁰ identical or different and represented by H and/or a straight-chain C₁ - C₄ alkyl group.

12. Building material mixture according to any of Claims 1 to 11, **characterized in that** the polyether macromonomer producing the polyether macromonomer structural unit is present as alkoxylated isoprenol, alkoxylated hydroxybutyl vinyl ether, alkoxylated (meth)allyl alcohol and/or vinylated methylpolyalkoxylene glycol having in each case preferably an arithmetic mean of 4 to 400 oxyalkylene groups.

13. Building material mixture according to any of Claims 1 to 12, **characterized in that** the copolymer suitable as a plasticizer and having polyether macromonomer structural units and acid monomer structural units has yet another structural unit, which is present according to the general formula (IIIa) and/or (IIIb) 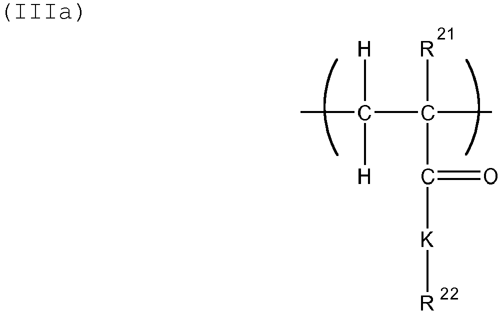 with
R²¹ identical or different and represented by H and/or a straight-chain or branched C₁ - C₄ alkyl group;
K identical or different and represented by O and/or NH;
R²² identical or different and represented by a branched or straight-chain C₁ - C₅ monohydroxyalkyl group; 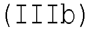 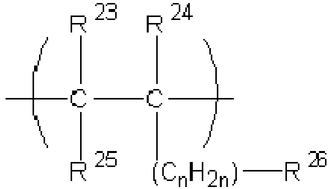
with
R²³, R²⁴ and R²⁵ in each case identical or different and in each case, independently, represented by H and/or a straight-chain or branched C₁ - C₄ alkyl group;
n identical or different and represented by 0, 1, 2, 3 and/or 4;
R²⁶ identical or different and represented by (C₆H₅), OH and/or -COCH₃.

14. Building material mixture according to any of Claims 1 to 13, **characterized in that** an arithmetic mean molar ratio of acid monomer structural units to polyether macromonomer structural units of 20 : 1 to 1 : 1, preferably of 12 : 1 to 1 : 1, is present in the copolymer suitable as a plasticizer.

15. Building material mixture according to any of Claims 1 to 14, **characterized in that** altogether at least 45 mol%, but preferably at least 80 mol%, of all structural units of the copolymer suitable as a plasticizer are present as acid monomer structural units and/or as polyether macromonomer structural units.

16. Building material formulation containing water and a building material mixture according to any of Claims 1 to 15.

17. Structure produced using a building material formulation according to Claim 16.

## Revendications

1. Mélange de matériau de construction, contenant :
a) 2,0 à 30,0 % en poids d'un liant hydraulique,
b) 69,0 à 97,0 % en poids d'un additif, l'additif se présentant sous la forme de sable, de gravier et/ou de pierres minérales,
c) 0,005 à 0,5 % en poids d'un copolymère comprenant des unités structurales de macromonomère de polyéther et des unités structurales de monomère acide, approprié en tant qu'agent fluidifiant, et
d) 0,005 à 0,5 % en poids d'un composé amphiphile macromoléculaire approprié en tant que bloqueur d'adsorption,
le composé amphiphile macromoléculaire approprié en tant que bloqueur d'adsorption comprenant en tant que constituant de base une unité structurale D-E-A provenant de la transformation des composants individuels D, E et A,
avec
E représenté par un composé comprenant au moins deux groupes isocyanate réactifs,
D représenté par un composé hydrophobe contenant au moins un groupe réactif avec les isocyanates, choisi parmi -OH, -NH₂, le composé hydrophobe étant un dérivé d'alkylpolyoxyalkylène ou un dérivé de polyisobutène, et la solubilité dans l'eau du composé hydrophobe à une température de 20 °C à la pression atmosphérique étant inférieure à 1 g/l,
A représenté par un composé hydrophile contenant au moins un groupe réactif avec les isocyanates, choisi parmi -OH, -NH₂, -COOH, la solubilité dans l'eau du composé hydrophile à une température de 20 °C à la pression atmosphérique étant supérieure à 10 g/l,
à condition que la transformation des composants individuels D, E et A ait lieu par réaction des groupes isocyanate réactifs avec les groupes réactifs avec les isocyanates.

2. Mélange de matériau de construction selon la revendication 1, contenant :
a) 4,0 à 20,0 % en poids d'un liant hydraulique,
b) 79,5 à 95,5 % en poids d'un additif, l'additif se présentant sous la forme de sable, de gravier et/ou de pierres minérales,
c) 0,01 à 0,25 % en poids d'un copolymère comprenant des unités structurales de macromonomère de polyéther et des unités structurales de monomère acide, approprié en tant qu'agent fluidifiant, et
d) 0,01 à 0,25 % en poids d'un composé amphiphile macromoléculaire approprié en tant que bloqueur d'adsorption.

3. Mélange de matériau de construction selon la revendication 1 ou 2, **caractérisé en ce que** le composé amphiphile macromoléculaire approprié en tant que bloqueur d'adsorption se présente selon l'un des types de structure suivants : 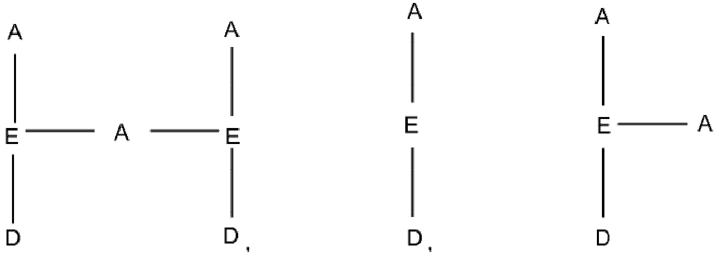 et/ou

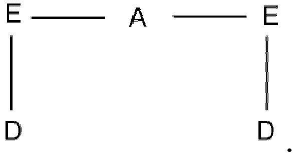

4. Mélange de matériau de construction selon la revendication 1 ou 2, **caractérisé en ce que** le composé amphiphile macromoléculaire approprié en tant que bloqueur d'adsorption se présente selon un type de structure qui comprend deux unités 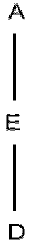 qui sont reliées à chaque fois les unes avec les autres par le biais du composant individuel E par un élément intermédiaire polymère en raison de la réaction de groupes isocyanate des composants individuels E avec des groupes réactifs avec les isocyanates de l'élément intermédiaire polymère, l'élément intermédiaire polymère contenant des groupes éther et présentant un poids moléculaire de 400 à 50 000, de préférence de 1 000 à 25 000 % en poids.

5. Mélange de matériau de construction selon l'une quelconque des revendications 1 à 4, **caractérisé en ce que** le composant individuel A se présente sous la forme d'un méthylpolyéthylène glycol ou sous la forme d'un polypropylène glycol.

6. Mélange de matériau de construction selon l'une quelconque des revendications 1 à 5, **caractérisé en ce que** le composant individuel D se présente sous la forme d'une polyisobutène-amine.

7. Mélange de matériau de construction selon l'une quelconque des revendications 1 à 6, **caractérisé en ce que** le composant individuel E se présente sous la forme d'un polyisocyanate trimère contenant trois groupes isocyanate réactifs.

8. Mélange de matériau de construction selon l'une quelconque des revendications 1 à 7, **caractérisé en ce que** le liant hydraulique se présente sous la forme de ciment.

9. Mélanges de matériau de construction selon l'une quelconque des revendications 1 à 8, **caractérisés en ce que** les unités structurales de monomère acide du copolymère approprié en tant qu'agent fluidifiant sont selon l'une des formules générales (Ia), (Ib), (Ic) et/ou (Id) : 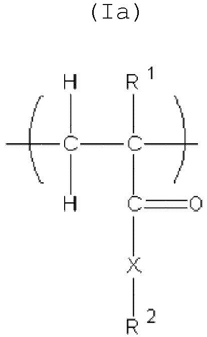 dans laquelle
les R¹ sont identiques ou différents, et représentés par H et/ou un groupe alkyle en C₁-C₄ non ramifié ou ramifié ;
les X sont identiques ou différents, et représentés par NH- (CₙH₂ₙ) avec n = 1, 2, 3 ou 4, et/ou O- (CₙH₂ₙ) avec n = 1, 2, 3 ou 4, et/ou par une unité non présente ;
les R² sont identiques ou différents, et représentés par OH, SO₃H, PO₃H₂, O-PO₃H₂ et/ou C₆H₄-SO₃H para-substitué, à condition que si X est une unité non présente, R² soit représenté par OH ; 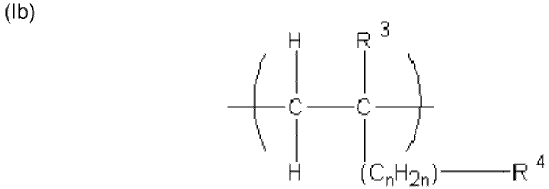
dans laquelle
les R³ sont identiques ou différents, et représentés par H et/ou un groupe alkyle en C₁-C₄ non ramifié ou ramifié ;
n = 0, 1, 2, 3 ou 4,
les R⁴ sont identiques ou différents, et représentés par SO₃H, PO₃H₂, O-PO₃H₂ et/ou C₆-C₄-SO₃H para-substitué ; 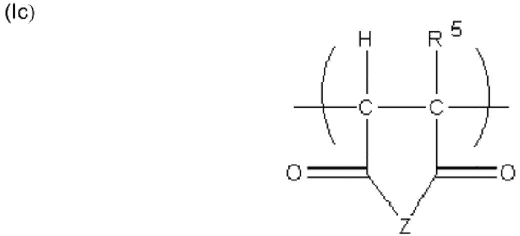
dans laquelle
les R⁵ sont identiques ou différents, et représentés par H et/ou un groupe alkyle en C₁-C₄ non ramifié ou ramifié ;
les Z sont identiques ou différents, et représentés par O et/ou NH ; 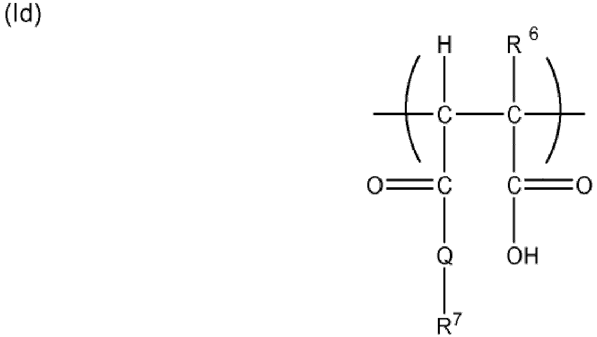
dans laquelle
les R⁶ sont identiques ou différents, et représentés par H et/ou un groupe alkyle en C₁-C₄ non ramifié ou ramifié ;
les Q sont identiques ou différents, et représentés par NH et/ou O ;
les R⁷ sont identiques ou différents, et représentés par H, (CₙH₂ₙ) -SO₃H avec n = 0, 1, 2, 3 ou 4, (CₙH₂ₙ) -OH avec n = 0, 1, 2, 3 ou 4 ; (CₙH₂ₙ) -PO₃H₂ avec n = 0, 1, 2, 3 ou 4, (CₙH₂ₙ) -OPO₃H₂ avec n = 0, 1, 2, 3 ou 4, (C₆H₄) - SO₃H, (C₆H₄)-PO₃H₂, (C₆H₄)-OPO₃H₂ et/ou (CₘH₂ₘ)ₑ-O-(T'O)_{α}-R⁹ avec m = 0, 1, 2, 3 ou 4, e = 0, 1, 2, 3 ou 4, T' = C_{x'}H_{2x'} avec x' = 2, 3, 4 ou 5, et/ou CH₂C(C₆H₅)H-, α = un nombre entier de 1 à 350 avec les R⁹ identiques ou différents, et représentés par un groupe alkyle en C₁-C₄ non ramifié ou ramifié.

10. Mélange de matériau de construction selon l'une quelconque des revendications 1 à 9, **caractérisé en ce que** le monomère acide formant les unités structurales de monomère acide se présente sous la forme d'acide méthacrylique, d'acide acrylique, d'acide maléique, d'anhydride de l'acide maléique, sous la forme d'un semi-ester de l'acide maléique ou sous la forme d'un mélange de plusieurs de ces espèces.

11. Mélange de matériau de construction selon l'une quelconque des revendications 1 à 10, **caractérisé en ce que** les unités structurales de macromonomère de polyéther du copolymère approprié en tant qu'agent fluidifiant sont selon l'une des formules générales (IIa), (IIb) et/ou (IIc) : 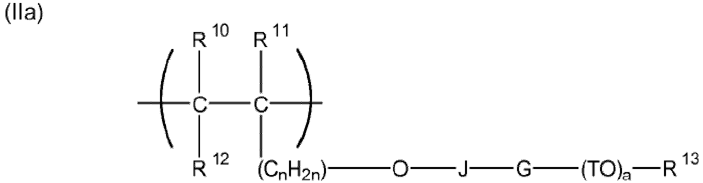 dans laquelle
R¹⁰, R¹¹ et R¹² sont chacun identiques ou différents, et représentés indépendamment les uns des autres par H et/ou un groupe alkyle en C₁-C₄ non ramifié ou ramifié ; les J sont identiques ou différents, et représentés par un groupe alkylène en C₁-C₆ non ramifié ou ramifié, un groupe cyclohexyle, CH₂-C₆H₁₀, C₆H₄ ortho-, méta- ou para-substitué et/ou une unité non présente ;
les G sont identiques ou différents, et représentés par O, NH et/ou CO-NH, à condition que si J est une unité non présente, G se présente également sous la forme d'une unité non présente ;
les T sont identiques ou différents, et représentés par CₓH₂ₓ avec x = 2, 3, 4 et/ou 5 (de préférence x = 2) et/ou CH₂CH(C₆H₅) ;
les n sont identiques ou différents, et représentés par 0, 1, 2, 3, 4 et/ou 5 ;
les a sont identiques ou différents, et représentés par un nombre entier de 2 à 350 (de préférence 10 à 200) ; les R¹³ sont identiques ou différents, et représentés par H, un groupe alkyle en C₁-C₄ non ramifié ou ramifié, CO-NH₂ et/ou COCH₃ ; 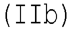 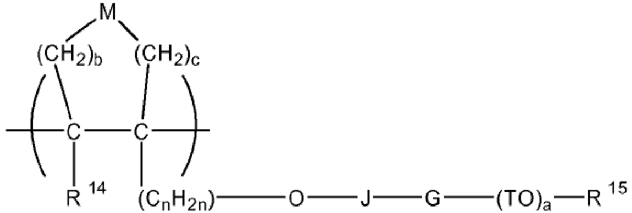
dans laquelle
les R¹⁴ sont identiques ou différents, et représentés par H et/ou un groupe alkyle en C₁-C₄ non ramifié ou ramifié ;
les J sont identiques ou différents, et représentés par un groupe alkylène en C₁-C₆ non ramifié ou ramifié, un groupe cyclohexyle, CH₂-C₆H₁₀, C₆H₄ ortho-, méta- ou para-substitué et/ou une unité non présente ;
les G sont identiques ou différents, et représentés par une unité non présente, O, NH et/ou CO-NH, à condition que si J est une unité non présente, G se présente également sous la forme d'une unité non présente ;
les T sont identiques ou différents, et représentés par CₓH₂ₓ avec x = 2, 3, 4 et/ou 5, et/ou CH₂CH(C₆H₅) ;
les n sont identiques ou différents, et représentés par 0, 1, 2, 3, 4 et/ou 5 ;
les a sont identiques ou différents, et représentés par un nombre entier de 2 à 350 ;
les M sont identiques ou différents, et représentés par une unité non présente, NH et/ou O, à condition que si D est une unité non présente : b = 0, 1, 2, 3 ou 4, et c = 0, 1, 2, 3 ou 4, avec b+c = 3 ou 4, et à condition que lorsque M représente NH et/ou O : b = 0, 1, 2 ou 3, c = 0, 1, 2 ou 3, avec b+c = 2 ou 3 ;
les R¹⁵ sont identiques ou différents, et représentés par H, un groupe alkyle en C₁-C₄ non ramifié ou ramifié, CO-NH₂ et/ou COCH₃ ; 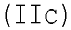 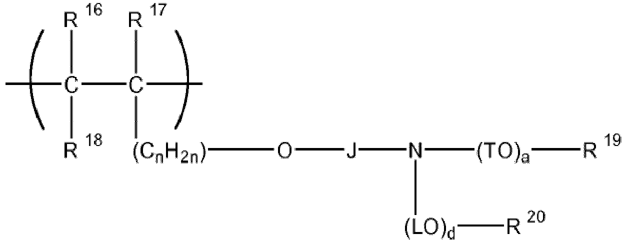
dans laquelle
R¹⁶, R¹⁷ et R¹⁸ sont chacun identiques ou différents, et représentés indépendamment les uns des autres par H et/ou un groupe alkyle en C₁-C₄ non ramifié ou ramifié ; les J sont identiques ou différents, et représentés par un groupe alkylène en C₁-C₆ non ramifié ou ramifié, un groupe cyclohexyle, CH₂-C₆H₁₀, C₆H₄ ortho-, méta- ou para-substitué et/ou par une unité non présente ;
les T sont identiques ou différents, et représentés par CₓH₂ₓ avec x = 2, 3, 4 et/ou 5, et/ou CH₂CH(C₆H₅) ;
les n sont identiques ou différents, et représentés par 0, 1, 2, 3, 4 et/ou 5 ;
les L sont identiques ou différents, et représentés par CₓH₂ₓ avec x = 2, 3, 4 et/ou 5, et/ou CH₂-CH(C₆-H₅) ;
les a sont identiques ou différents, et représentés par un nombre entier de 2 à 350 ;
les d sont identiques ou différents, et représentés par un nombre entier de 1 à 350 ;
les R¹⁹ sont identiques ou différents, et représentés par H et/ou un groupe alkyle en C₁-C₄ non ramifié ou ramifié,
les R²⁰ sont identiques ou différents, et représentés par H et/ou un groupe alkyle en C₁-C₄ non ramifié.

12. Mélange de matériau de construction selon l'une quelconque des revendications 1 à 11, **caractérisé en ce que** le macromonomère de polyéther formant l'unité structurale de macromonomère de polyéther se présente sous la forme d'isoprénol alcoxylé, d'éther d'hydroxybutylvinyle alcoxylé, d'alcool (méth)allylique alcoxylé et/ou de méthylpolyalcoxylène glycol vinylé avec de préférence à chaque fois un nombre arithmétique moyen de groupes oxyalkylène de 4 à 400.

13. Mélange de matériau de construction selon l'une quelconque des revendications 1 à 12, **caractérisé en ce que** le copolymère comprenant des unités structurales de macromonomère de polyéther et des unités structurales de monomère acide, approprié en tant qu'agent fluidifiant, comprend en outre une unité structurale supplémentaire, qui se présente selon les formules générales (IIIa) et/ou (IIIb) : 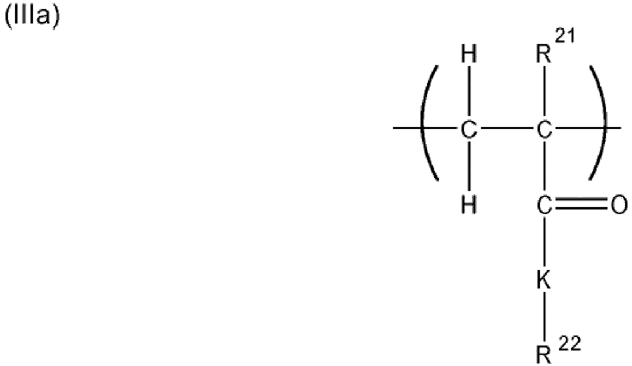 dans laquelle
les R²¹ sont identiques ou différents, et représentés par H et/ou un groupe en C₁-C₄ non ramifié ou ramifié ; les K sont identiques ou différents, et représentés par O et/ou NH ;
les R²² sont identiques ou différents, et représentés par un groupe monohydroxyalkyle en C₁-C₅ ramifié ou non ramifié ; 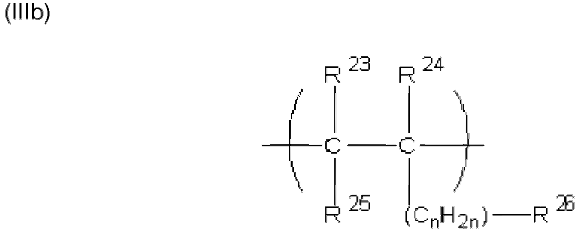
dans laquelle
R²³, R²⁴ et R²⁵ sont chacun identiques ou différents, et chacun représentés indépendamment par H et/ou un groupe alkyle en C₁-C₄ non ramifié ou ramifié ;
les n sont identiques ou différents, et représentés par 0, 1, 2, 3 et/ou 4 ;
les R²⁶ sont identiques ou différents, et représentés par (C₆H₅), OH et/ou -COCH₃.

14. Mélange de matériau de construction selon l'une quelconque des revendications 1 à 13, **caractérisé en ce qu'**un rapport molaire arithmétique moyen entre les unités structurales de monomère acide et les unités structurales de macromonomère de polyéther de 20:1 à 1:1, de préférence de 12:1 à 1:1, est présent dans le copolymère approprié en tant qu'agent fluidifiant.

15. Mélange de matériau de construction selon l'une quelconque des revendications 1 à 14, **caractérisé en ce qu'**au total au moins 45 % en moles, de préférence toutefois au moins 80 % en moles, de toutes les unités structurales du copolymère approprié en tant qu'agent fluidifiant se présentent sous la forme d'unités structurales de monomère acide et/ou sous la forme d'unités structurales de macromonomère de polyéther.

16. Formulation de matériau de construction contenant de l'eau et un mélange de matériau de construction selon l'une quelconque des revendications 1 à 15.

17. Ouvrage fabriqué en utilisant une formulation de matériau de construction selon la revendication 16.
